Europäisches Patentamt

European Patent Office

Office européen des brevets

(11) Publication number: **0 159 738**
**B1**

# EUROPEAN PATENT SPECIFICATION

(45) Date of publication of patent specification: **19.07.89**

(21) Application number: **85200419.1**

(22) Date of filing: **19.03.85**

(51) Int. Cl.⁴: **F 16 B 7/04, F 16 B 12/32, F 16 B 12/40**

(54) Joint between a tube and a rod or other tube being at an angle to the former.

(30) Priority: **20.03.84 NL 8400882**

(43) Date of publication of application:
**30.10.85 Bulletin 85/44**

(45) Publication of the grant of the patent:
**19.07.89 Bulletin 89/29**

(84) Designated Contracting States:
**AT BE CH DE FR GB IT LI NL SE**

(56) References cited:
**DE-A-2 018 648**
**FR-A-2 063 488**
**GB-A-2 113 537**
**NL-C- 93 130**
**US-A-3 522 960**

(73) Proprietor: **Kuenen, Dirk Jan Gerrit**
**Anna van Saksenstraat 14**
**NL-7051 BD Varsseveld (NL)**

(72) Inventor: **Kuenen, Dirk Jan Gerrit**
**Anna van Saksenstraat 14**
**NL-7051 BD Varsseveld (NL)**

(74) Representative: **Schumann, Bernard Herman Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a joint between a first tube and a second tube or rod, lying in the same plane at an angle, for example, a right angle to the first tube for the manufacture of scaffoldings, frameworks, show window stands, exhibiting racks, ladders, steel furniture or other constructions composed of rod-shaped members, said joint being provided

with a ring arranged around said second tube or rod and fastened thereto and being split at least at one place,

the or each pair of ends of said ring bounding a gap and each end carrying a limb, which is parallel to the other limb and parallel to the longitudinal axis of the second tube or rod, a pair of parallel limbs constituting a plug extending into the first tube, and

with at least one screw bolt screwed into a tapped hole of the connecting element formed by the ring and the limbs and adapted to be tightened and untightened from the outside for fastening the plug in the first tube as well as for fastening the ring to the second tube or rod.

A joint of this kind is known from NL—C—93 130. The one- or multi-part ring of this known joint has a tapped hole or tapped holes for one or more screw bolts. For this purpose it must have a relatively great radial thickness, which implies that at the place of the joint it often constitutes a troublesome, unaesthetical thickening of the tubes and/or rods and can only be made by casting or forging, which requires much material and a careful after-treatment, so that the costs are high. Moreover said ring is little elastic so that for fixing it, only the clamping force between the insertion end of the or each bolt and the or each radially opposite place on the inner surface of the ring can be used. For a reliable fixation of the ring around the second tube or rod the or each screw bolt has to be tightened with heavy force, which is likely to cause damage of the rod or the tube. Finally for the connection of only one first tube with the second rod or tube the ring must consist of two parts attachable to one another at a place opposite the plug for the first tube, because otherwise it cannot be arranged on existing rod structures without the need for first partly dismounting these structures.

The invention has for its object to provide a joint of the kind set forth in the preamble, which obviates the disadvantages of the known joint in a simple and cheap manner. This is achieved in that

the ring is a one- or multi-part clamping strap of sheet material,

one of the two limbs of the or each plug has the tapped hole for the bolt and the other limb of the plug concerned and the wall of the first tube have, at a place directly adjacent the other limb a hole which permits the passing of at least a wrench for turning the bolt about its longitudinal axis,

the tapped hole and the two further holes are coaxial and have their axes of revolution directed transversely to a plane extending through the longitudinal axis of the first tube and the longitudinal axis of the second tube or rod, and

the wall of the first tube forms a stop for the insertion end of the bolt.

In this case the ring or clamping strap may consist of a thin strip, which can be readily clamped around practically the whole circumference of the second tube or rod, whilst it can be reliably guarded against axial displacement and rotation by means of a relatively slight force for pressing towards one another the limbs of the or each plug.

When the clamping strap passed around the rod or the tube is inserted with one of two parallel limbs of a plug into the first tube to be connected with said second tube or rod and when subsequently the bolt screwed into the tapped hole of one limb is tightened, the other limb is pressed against the inner wall of the first tube after the bolt contacts said inner wall by its insertion end, after which the first-mentioned limb is pressed towards the other limb. As a result the clamping strap is clamped tightly around the second tube or rod and the first tube to be connected therewith about the insertion end of the bolt and the other limb.

Although the limbs may be fastened as separate parts to the clamping strap, a particularly simple and cheap connecting element is obtained when the clamping strap or each of the parts forming said strap and the two limbs and associated each with its own end of the strap or part thereof are formed by a single strip.

For enhancing the force by which the limb concerned is pressed by the bolt against the inner wall of the first tube to be connected with the second tube or rod it is advisable to arrange a spacer between the two limbs of the or each plug. Preferably, the spacer is arranged between the free ends of said limbs. In this case it also increases the force by which the clamping strap is clamped around the second tube or rod. The spacer may form part of the clamping strap and the limbs of the or each plug.

It is advantageous for said strap or each part thereof to have at least in the limbs a transverse profile increasing the longitudinal bending resistance. Also thereby the clamping force of the plug in the first tube and that of the clamping strap around the second tube or rod can be raised.

A construction capable of preventing withdrawal of the plug from the tube after tightening of the bolt to the clamping strap against the clamping force exerted by the plug and the bolt on the tube or rod is obtained when the adjacent holes in the wall of the first tube and the limb concerned of the plug permit the passing of the bolt, that in the position in which the insertion end of the bolt is pressed against the inner surface of the wall of the tube the bolt extends by a part at or near the other end in the hole of said wall and that the insertion end of the bolt and the part of the first tube cooperating with said insertion end are so constructed that they secure the insertion end against radial displacement in the operative state of the joint. For the latter purpose an end part adjoining the insertion end of the bolt may have a smaller diameter or smaller diameters than the bolt, said end part being, for example, tapering and the wall of the first tube concerned may have at the area of the insertion end, a pit directed towards said end and adapted thereto or a hole matching said end.

A joint having particular properties is obtained when the bolt has a conical head tapering towards the insertion end and extending in fitting relation through the adjacent holes in the wall of the first tube concerned matching the conical shape of said head and in the limb concerned of the plug positioned in said first tube. In the first place said head prevents the clamping force of the plug in the first tube from exceeding a fixed value so that deformation of the strap due to excessive tightening of the bolt is avoided. In the second place the clamping force of the clamping strap around the second tube or rod can be drastically increased despite the limitation of the clamping force of the plug in the first tube, which is highly important for heavily loaded scaffoldings, frameworks and ladders. Thirdly, the bolt lies clearance-free in a radial direction in the holes of the wall of the first tube and the limb concerned of the plug.

For supporting, for example, boards of frameworks made in accordance with the invention it is advantageous to use a joint having a supporting bracket, comprising a strip having a part with a form bent at least half-circular fitting around the first tube and an adjacent limb directed radially outwardly and in that the bent part has, at a place diametrically opposite the limb, a radially inwardly directed bulging part or a lug fitting in a hole of said tube or in a socket hole in the head of the screw bolt of the joint concerned.

The invention will be described more fully with reference to the drawing. The drawing shows in:

Fig. 1 a sectional view of two tubes interconnected at an angle of 90° in accordance with the invention;

Fig. 2 a cross-sectional view taken on the line II—II in Fig. 1;

Fig. 3 a sectional view of three tubes interconnected at angles of 90° in accordance with the invention;

Fig. 4 a cross-sectional view taken on the line IV—IV in Fig. 3;

Fig. 5 an elevational view of a rod or tube with which a tube is connected at an angle of 60°;

Fig. 6 a cross-sectional view of part of a joint embodying the invention, in which the screw bolt extends by its conical insertion end into a hole in the wall of a tube and is thus guarded against radial displacement;

Fig. 7 a cross-sectional view of a variant of the detail of Fig. 6;

Fig. 8 a cross-sectional view of a horizontal tube of a framework with a joint embodying the invention and an elevational view of a supporting bracket bearing on said tube; and

Fig. 9 a perspective view of part of a storage frame work to which the invention is applied.

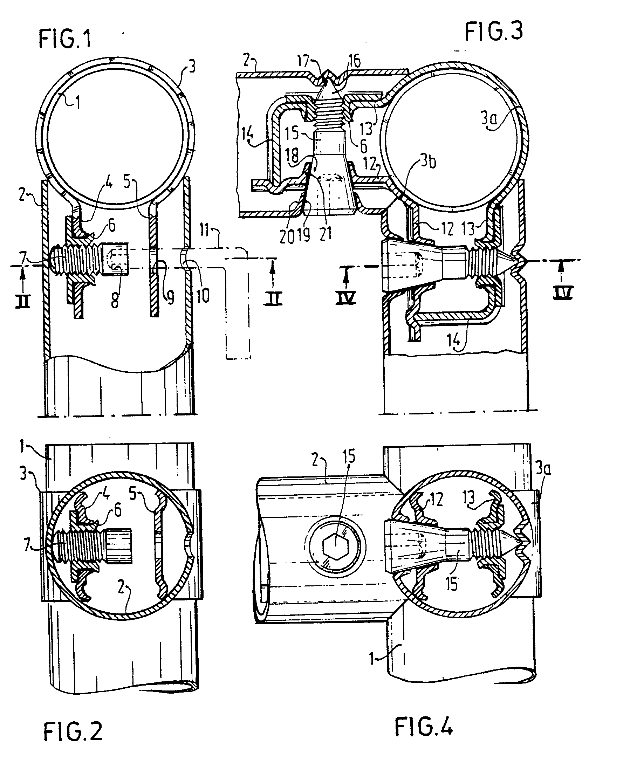

Referring to Figs. 1 and 2, reference numeral 1 designates a vertical, tubular post of a scaffolding, a show window stand, an exposition rack, a ladder, steel furniture or other construction composed of other rod-shaped elements. This post may be replaced by a rod. Reference numeral 2 designates a horizontal tube connected with the tube 1. The joint between the tubes 1 and 2 comprises a clamping strap 3 arranged around the tube 1, the ends of which terminate in limbs 4 and 5. The limb 4 has rigidly secured to it a nut 6 into which is screwed a screw bolt 7 with a socket hole 8. The limb 5 and the wall of the tube 2 have holes 9 and 10 coaxial with the nut 6 and sufficiently large for passing a socket wrench 11.

When the bolt 7 is sufficiently turned back, the limbs 4, 5 on the clamping strap 3 surrounding the tube 1 form together a plug that can be inserted with some clearance into the tube 2. When the plug 4, 5 is at its place in the tube 2, the nut 6 and the hole 9 are coaxial with the hole 10 so that the socket wrench 11 can be inserted inwardly into the socket hole 8. When the bolt is tightened with the aid of said wrench, the insertion end of the bolt 7 comes into contact with the inner surface of the tube 2 and the limbs 5, 4 are pressed to the right, viewed in Figs. 1 and 2. The limb 5 is thus pressed by its longitudinal edges against the tube 2. When the bolt 7 is further tightened, the limb 4 is screwed towards the limb 5 and the clamping strap 3 is clamped tight around the tube 1. The clamping strap 3 and the limbs 4, 5 are formed by a single, curved, bent-over strip of sheet material. By profiling the cross section of the strip in the limbs 4, 5 the longitudinal resistance to bending of the latter is materially raised.

The embodiment shown in Figs. 1 and 2 is very simple and cheap, it is true, but it has a few disadvantages. When the bolt 7 is sufficiently tightened to ensure a satisfactory clamping between the tube 1 and the clamping strap 3, the clamping of the bolt 7 and the limb 5 in the tube 2 may still allow a withdrawal of the plug 4, 5, 7 out of the tube 2 under given loads. Moreover, the limb 4 may be drawn obliquely with respect to the limb 5. There is, moreover, the risk that the bolt 7 is tightened to an extent such that the tube 2 is deformed at the area of the insertion end of the bolt 7 and of the edges of the limb 5. This risk is the greater, the thinner is the wall of the tube 2.

Said disadvantages of the embodiment of Figs. 1 and 2 are obviated in the embodiment shown in Figs. 3 and 4. Fig. 3 shows, moreover, that more than one tube 2 can be connected in the same plane with the tube 1 in the manner according to the invention.

Referring to Figs. 3 and 4 the clamping strap is split at two places so that it consists of two parts 3a and 3b. At its end the part 3a terminates in limbs 12 and part 3b in limbs 13. Each pair of co-operating limbs 12 and 13 again forms a plug insertable into the tube 2. At its free end the limb 13 is bent over and forms with the bent-over part a spacer 14 between the limbs 12 and 13. This spacer 14 ensures that the limbs 12 and 13 remain practically parallel when the bolt 15 is being tightened and that the clamping strap 3a, 3b is clamped with a heavy force. The screw bolt 15 bears by the conical insertion end 16 in a pit 17 formed in the wall of the tube 2. The head 18 of the bolt 15 is tapering towards the insertion end and bears in a matching conical hole 19 having an inwardly pressed edge 20 in the wall of the tube 2. Owing to its conical hole 21 the limb 12, just after its longitudinal edges are pressed against the inner surface of the tube 2, finds a stop on the head 18 of the bolt so that by further tightening the bolt the clamping force between the limb 12 and the tube 2 is not raised, but the clamping force between the clamping strap parts 3a and 3b and the tube 1 is, indeed, raised. This is important when the tube 1 forms a post of a scaffolding, a framework or a ladder whose floor or board bearing on the tube 2 or rung is heavily loaded. A further advantage of this construction is that the bolt 15, 16, 18 is guarded clearance-free against radial displacement and the limbs 12, 13 cannot be drawn out of the tube 2, which could be done in the embodiment shown in Figs. 1 and 2.

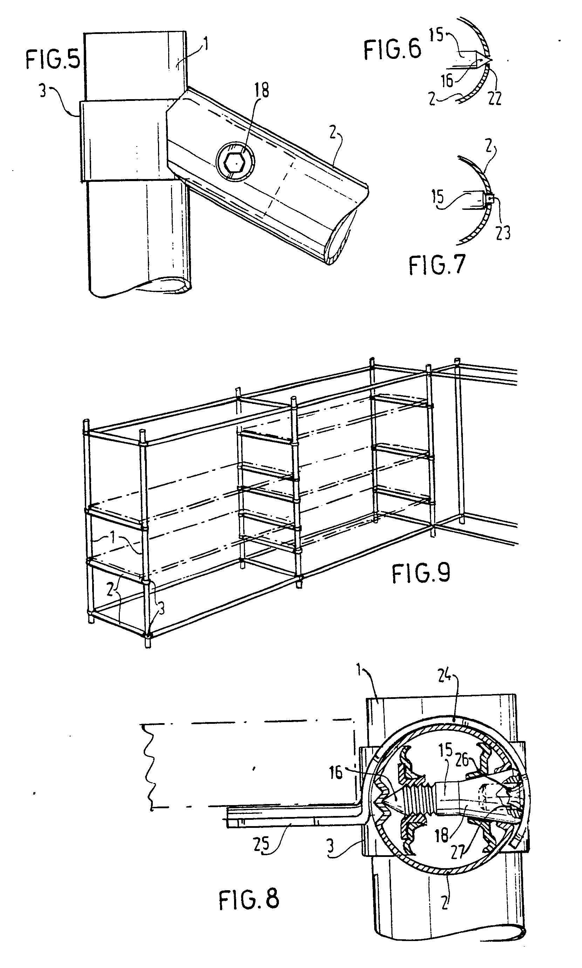

Fig. 5 shows that the two tubes 1 and 2 need not be at right angles to one another.

Referring to Fig. 6 the pit 17 of Figs. 3 and 4 is replaced by a hole 22 in the wall of the tube 2.

Fig. 7 shows a cylindrical insertion end 23 of the bolt 15. The diameter of this end is smaller than that of the bolt 15 and said insertion end 23 also extends into a hole in the wall of the tube 2.

Fig. 8 shows the same cross-sectional flow as Fig. 4. The tube 2 is provided with a bracket whose semi-circular part 24 fits around about half the circumference of the tube and bears thereon, whereas the straight part 25 directed radially to the part 24 forms a horizontal support for a board or a floor of a scaffolding. In order to guard the bracket against turning the part 24 extends with the inwardly directed bulging part 26 obtained by a hole depressed from the outside the socket hole 27 of the bolt head 18.

It is noted that the joint embodying the invention may also be used for rods and tubes of other sections than circular ones.

According to the invention it is also possible to interconnect solid rods by slipping cylindrical sockets onto the respective ends capable of receiving the plugs.

## Claims

1. A joint between a first tube and a second tube or rod, lying in the same plane at an angle, for example, a right angle to the first tube for the manufacture of scaffoldings, frameworks, show window stands, exhibition racks, ladders, steel furniture or other constructions composed of rod-shaped members, said joint being provided with a ring arranged around said second tube or rod and fastened thereto and being split at least at one place, the or each pair of ends of said ring bounding a gap and each end carrying a limb, which is parallel to the other limb and parallel to the longitudinal axis of the second tube or rod, a pair of parallel limbs constituting a plug extending into the first tube, and with at least one screw bolt screwed into a tapped hole of the connecting element formed by the ring and the limbs and adapted to be tightened and untightened from the outside for fastening the plug in the first tube as well as for fastening the ring to the second tube or rod, characterized in that the ring is a one- or multi-part clamping strap (3, 3a, 3b) of sheet material, one of the two limbs (4, 13) of the or each plug has the tapped hole (6) for the bolt (7, 15) and the other limb (5, 12) of the plug concerned and the wall of the first tube (2) have, at a place directly adjacent the other limb (5, 12), a hole (9, 21 and 10, 19) which permits the passing of at least a wrench (11) for turning the bolt (7, 15) about its longitudinal axis, the tapped hole (6) and the two further holes (9, 21 and 10, 19) are coaxial and have their axes of revolution directed transversely to a plane extending through the longitudinal axis of the first tube (2) and the longitudinal axis of the second tube or rod (1), and the wall of the first tube (1) forms a stop for the insertion end (16) of the bolt (7, 15).

2. A joint as claimed in claim 1, characterized in that the clamping strap (3) or each of the parts (3a, 3b) forming said strap and the two limbs (4, 13 and 5, 12) associated each with its own end of the strap or the part thereof are formed by one single strip.

3. A joint as claimed in claim 1 or 2, characterized in that a spacer (14) is arranged between the two limbs (12, 13) of the or each plug and preferably between the free ends of the limbs.

4. A joint as claimed in claim 2 or 3, characterized in that the spacer (14) also forms part of said strap or parts thereof.

5. A joint as claimed in claim 2, 3 or 4, characterized in that the strap or each part thereof has, at least in the limbs (4, 13 and 5, 12) a transverse profile increasing the longitudinal resistance to bending.

6. A joint as claimed in anyone of the preceding claims, characterized in that the adjacent holes (19, 21) in the wall of the first tube (2) and the limb concerned (12) of the plug permit the passing of the bolt (15), that in the position in which the insertion end (16, 23) of the bolt is pressed against the inner surface of the wall of the first tube (2) the bolt extends by a part (18) at or near the other end in the hole (19) of said wall, and that the insertion end (16, 23) of the bolt (15) and the part (17, 22) of the first tube (2) cooperating with said insertion end are so constructed that they secure the insertion end against radial displacement in the operative state of the joint.

7. A joint as claimed in claim 6, characterized in that an end part adjoining the insertion end of the bolt (15) has a smaller diameter or smaller diameters than the bolt, said end part being, for example, tapering, and that the wall of the first tube (2) concerned has, at the area of the insertion end, a pit (17) directed towards said end and adapted thereto or a hole (22) matching said end.

8. A joint as claimed in claim 6 or 7, characterized in that the bolt (15) has a conical head (18) tapering towards the insertion end (16) and extending in fitting relation through the adjacent holes (19, 21) in the wall of the first tube (2) concerned matching the conical shape of said head and in the limb (12) concerned of the plug positioned in said first tube.

9. A joint as claimed in anyone of the preceding claims, having a supporting bracket comprising a strip having a part (24) with a form bent at least half-circular fitting around the first tube (2) and an adjacent limb (25) directed radially outwardly and in that the bent part (24) has, at a place diametrically opposite the limb (25), a radially inwardly directed bulging part (26) or a lug fitting in a hole of said tube or in a socket hole (27) in the head (18) of the screw bolt (15) of the joint concerned.

## Patentansprüche

1. Verbindung zwischen einem ersten Rohr und einem zweiten Rohr oder einer Stange, das oder die unter einem Winkel in der gleichen Ebene liegen, z.B. unter einem rechten Winkel zum ersten Rohr für die Herstellung von Gerüsten, Rahmenwerken, Schaufensterständen, Ausstellungsregalen, Leitern, Stahlmöbeln oder anderer Konstruktionen, die aus stangenförmigen Elementen zusammengesetzt sind, wobei die Verbindung versehen ist mit einem Ring, der um das zweite Rohr bzw. die zweite Stange herum angeordnet ist und daran befestigt ist und zumindest an einer Stelle gespalten ist, wobei das oder jedes Paar von Ringenden einen Spalt begrenzen und jedes Ende ein Armglied trägt, welches parallel zu dem anderen Armglied und parallel zu der Längsachse des zweiten Rohres bzw. der zweiten Stange ist, wobei ein Paar paralleler Armglieder eine Steckeinheit bilden, die sich in das erste Rohr hineinerstreckt und mit zumindest einem Schraubbolzen, der in eine Gewindebohrung des aus einem Ring und den Armgliedern gebildeten Verbindungselementes eingeschraubt ist und so ausgebildet ist, daß er von außen festgezogen und gelöst werden kann, um sowohl die Steckeinheit im ersten Rohr zu befestigten als auch den Ring am zweiten Rohr bzw. an der zweiten Stange zu befestigen, dadurch gekennzeichnet, daß der Ring ein eine- oder mehrteiliger Klemmbügel (3, 3a, 3b) aus flächigem Material ist, wobei eines der beiden Armglieder (4, 13) der oder jeder Steckeinheit die Gewindebohrung (6) für den Bolzen (7, 15) aufweist und das andere Armglied (5, 12) der betreffenden Steckeinheit und die Wand des ersten Rohres (2) an einer Stelle direkt angrenzend an das andere Armglied (5, 12) eine Bohrung (9, 21 und 10, 19) aufweisen, die das Durchführen von zumindest einem Schlüssel (11) zum Drehen des Bolzens (7, 15) um seine Längsachse ermöglicht, wobei die Gewindebohrung (6) und die zwei weiteren Bohrungen (9, 21) und (10, 19) koaxial sind und ihre Umdrehungsachsen quer zu einer Ebene gerichtet haben, die sich durch die Längsachse des ersten Rohres (2) und der Längsachse des zweiten Rohres bzw. der zweiten Stange (1) erstreckt, und wobei die Wand des ersten Rohres (2) eine Raste für das Einsteckende (16) des Bolzens (7, 15) bildet.

2. Verbindung nach Anspruch 1, dadurch gekennzeichnet, daß der Klemmbügel (3) oder jedes der Teile (3a, 3b), die den Bügel bilden und die zwei Armglieder (4, 13 und 5, 12), die jeweils selbst mit ihrem eigenen Ende des Bügels oder dessen Teil verbunden sind, aus einen einzelnen Streifen gebildet sind.

3. Verbindung nach Anspruch 1 oder 2, dadurch gekennzeichnet, daß ein Abstandshalter (14) zwischen den zwei Armgliedern (12, 13) der oder jeder Steckeinheit und vorzugsweise zwischen den freien Enden der Armglieder angeordnet ist.

4. Verbindung nach Anspruch 2 oder 3, dadurch gekennzeichnet, daß der Abstandshalter (14) auch ein Teil des Bügels oder Teile von diesem bildet.

5. Verbindung nach Anspruch 2, 3 oder 4, dadurch gekennzeichnet, daß der Bügel oder jeder seiner Teile zumindest in den Armgliedern (4, 13 und 5, 12) ein Schrägprofil hat, das die Biegefestigkeit in Längsrichtung erhöht.

6. Verbindung nach einem der vorstehenden Ansprüche, dadurch gekennzeichnet, daß die benachbarten Bohrungen (19, 21) in der Wand des ersten Rohres (2) und des betreffenden Armgliedes (12) der Steckeinheit das Durchführen des Bolzens (15) zulassen, daß in der Position, in der das Einsteckende (16, 23) des Bolzens gegen die Innenfläche der Wand des ersten Rohres (2) gedrückt wird, der Bolzen durch eine Teil (18) sich am oder nahe an das andere Ende in der Bohrung (19) der Wand erstreckt, und daß das Einsteckende (16, 23) des Bolzens (15) und das Teil (17, 22) des ersten Rohres (2), das mit dem Einsteckende zusammenwirkt, so ausgebildet sind, daß sie das Einsteckende gegen eine radiale Verstellung im Arbeitszustand der Verbindung sichern.

7. Verbindung nach Anspruch 6, dadurch gekennzeichnet, daß ein Endteil angrenzend an das Einsteckende des Bolzens (15) einen kleineren Durchmesser oder kleinere Durchmesser als der Bolzen hat, wobei das Endteil sich z.B. verjüngt, und daß die Wand des ersten betreffenden Rohres (2) an dem Bereich des Einsteckendes eine Vertiefung (17), die gegen das Ende gerichtet ist und daran angepaßt ist oder ein Loch (22) entsprechend dem Ende aufweist.

8. Verbindung nach Anspruch 6 oder 7, dadurch gekennzeichnet, daß der Bolzen (15) einen konischen Kopf (18) hat, der sich gegen das Einsteckende (16) hin verjüngt und sich in Paßform durch die benachbarten Bohrungen (19, 21) in der Wand des ersten betreffenden Rohres (2), die an die konische Gestalt des Kopfes angepaßt sind und in das betreffende Armglied (12) der Steckeinheit, die im ersten Rohr angeordnet ist, erstreckt.

9. Verbindung nach einem der vorstehenden Ansprüche, mit einer Tragklammer, umfassend einen Streifen mit einem Teil (24) mit einer Form, die zumindest halbkreisförmig passend um das erste Rohr (2) gebogen ist und einem angrenzenden Armglied (25), das radial nach außen gerichtet ist, und in der das gebogene Teil (24) an einer dem Armglied (25) diametral gegenüberliegenden Stelle einen radial nach innen gerichteten Wölbungsteil (26) oder ein Ansatzstück in einem Loch des Rohres oder in einem Steckloch (27) im Kopf (18) des Schraubbolzens (15) der betreffenden Verbindung aufweist.

**Revendications**

1. Joint entre un premier tube et un deuxième tube ou une barre, contenu dans le même plan et qui forme un angle, par exemple, un angle droit, avec le premier tube, pour la construction d'échafaudages, de charpentes, de meubles de vitrines, de présentoirs, d'échelles, de pièces de mobilier en acier ou d'autres constructions composées d'éléments en forme de barre, ledit joint comprenant
— un manchon disposé autour dudit deuxième tube ou de ladite barre, fixé à ce tube ou à cette barre et fendu en au moins un endroit,
— la paire d'extrémités ou chaque paire d'extrémités de ce manchon délimitant un espace libre et chaque extrémité portant une branche qui est parallèle à l'autre branche et parallèle à l'axe longitudinal du deuxième tube ou de la barre, une paire de branches parallèles constituant un tenon qui pénètre dans ledit deuxième tube, et
— au moins une vis vissée dans un trou taraudé de l'élément d'assemblage formé par le manchon et les branches et adaptée pour être serrée et desserrée de l'extérieur pour fixer le tenon dans le premier tube ainsi que pour fixer le manchon au deuxième tube ou à la barre caractérisé en ce que
— le manchon est un collier de serrage en tôle (3, 3a, 3b), en une pièce ou en plusieurs pièces,
— l'une des deux branches (4, 13) du tenon ou de chaque tenon présente le trou taraudé destiné à recevoir la vis (7, 15), et l'autre branche (5, 12) du tenon et la paroi du premier tube (2) présentent, en un emplacement directement adjacent à l'autre branche (5, 12), un trou (9, 21 et 10, 19) qui permet de faire passer au moins une clé (11) pour faire tourner la vis (7, 15) autour de son axe longitudinal,
— le trou taraudé et les deux autres trous (9, 21 et 10, 19) sont coaxiaux et présentent leurs axes de révolution orientés transversalement à un plan qui passe par l'axe longitudinal du premier tube (2) et par l'axe longitudinal du deuxième tube ou de la barre (1); et
— la paroi du premier tube (2) forme une butée pour l'extrémité d'insertion (16) de la vis (7, 19).

2. Joint selon la revendication 1, caractérisé en ce que le collier de serrage (3) ou chacune des parties (3a, 3b) qui forment ce collier, et les deux branches (4, 13 et 5, 12) associées chacune à une extrémité du collier ou de la partie de collier sont formées d'une seule bande.

3. Joint selon l'une des revendications 1 et 2, caractérisé en ce qu'une entretoise (14) est disposée entre les deux branches (12, 13) du tenon ou de chaque tenon et, de préférence, entre les extrémités libres des branches.

4. Joint selon l'une des revendications 2 ou 3, caractérisé en ce que l'entretoise (14) fait aussi partie du collier ou des parties de ce collier.

5. Joint selon l'une des revendication 2 à 4, caractérisé en ce que le collier ou chaque partie du collier possède, au moins dans les branches (4, 13 et 5, 12) un profil transversal qui augmente sa résistance longitudinale à la flexion.

6. Joint selon l'une des revendications précédentes, caractérisé en ce que:
— les trous adjacents (19, 21) formés dans la paroi du premier tube (2) et la branche considérée (12) du tenon permettent de faire passer la vis (15),
— dans la position dans laquelle l'extrémité d'insertion (16, 23) de la vis est pressée contre la surface intérieure de la paroi du premier tube (2), la vis s'étend, dans une partie (18) située à l'autre extrémité ou qui est proche de l'autre extrémité, dans le trou (19) de ladite paroi,
— l'extrémité d'insertion (16, 23) de la vis (15) et la partie (17, 22) du premier tube (2) qui coopère avec ladite extrémité d'insertion sont construites de manière à bloquer l'extrémité d'insertion à l'encontre du déplacement radial dans l'état de travail du joint.

7. Joint selon la revendication 6, caractérisé en ce qu'une partie d'extrémité adjacente à l'extrémité de la vis d'insertion (15) possède un plus petit diamètre ou des plus petits diamètres que la vis, ladite partie d'extrémité étant, par exemple conique, et en ce que la paroi du premier tube (2) considéré, possède, dans la région de l'extrémité d'insertion, une cavité (17) dirigée vers ladite extrémité et adaptée à cette extrémité, ou un trou complémentaire de ladite extrémité.

8. Joint selon l'une des revendications 6 et 7, caractérisé en ce que la vis (5) possède une tête conique (18) qui s'emincit vers l'extrémité d'insertion (16) et s'étend, avec ajustement, à travers les trous adjacents (19, 21) formés dans la paroi du premier tube (2) considéré, qui épousent la forme conique de ladite tête, et dans la branche (2) considérée du tenon positionné dans le premier tube.

9. Joint selon l'une des revendications précédentes, possédant une console support qui comprend une bande ayant une partie (24) d'une forme recourbée au moins semi-circulaire, qui s'ajuste autour du premier tube (2) et une branche adjacente (25) dirigée radialement vers l'extérieur, et en ce que la partie recourbée (24) présente, en un emplacement diamètralement opposé à la branche (25), une partie saillante (20) dirigée radialement vers l'intérieur, ou une patte, qui s'ajuste dans un trou dudit tube ou dans une empreinte (27) ménagée dans la tête (18) de la vis (15) du joint considéré.

FIG.1

FIG.3

FIG.2

FIG.4

FIG.5

3

1

18

2

FIG.6

15

16

2

22

2

15

23

FIG.7

FIG.9

1

2

3

1

24

16

15 26

25

3

18 27

2

FIG.8

2